# EUROPEAN PATENT APPLICATION

(11) **EP 2 626 790 A1**
(43) Date of publication of application: **14.08.2013**
(21) Application number: 10858101.8
(22) Date of filing: 04.10.2010
(51) Int. Cl.: G06F 11/30, G06F 11/32

(54) **FAULT MONITORING DEVICE, FAULT MONITORING METHOD AND PROGRAM**

(71) Applicant: Fujitsu Limited, Kawasaki-shi, Kanagawa 211-8588 (JP)
(72) Inventor: SUGIMOTO, Mitsuo, Kawasaki-shi Kanagawa 211-8588 (JP)
(74) Representative: HOFFMANN EITLE
(86) International application number: PCT/JP2010/067397
(87) International publication number: WO 2012/046293

(57) **Abstract**

System management firmware (16) of the server (10) receives designation information that designates monitored objects (i.e., plural error status registers), an acquisition beginning condition of log data from the monitored objects, and a time interval for acquiring the log data. When the acquisition beginning condition of the log data is met, the system management firmware (16) acquires the log data from the monitored objects according to the designated time interval, and outputs the acquired log data in the form of a list according to time order.

## Description

### FIELD

The present invention relates to a fault monitoring device, a fault monitoring method, and a program.

### BACKGROUND

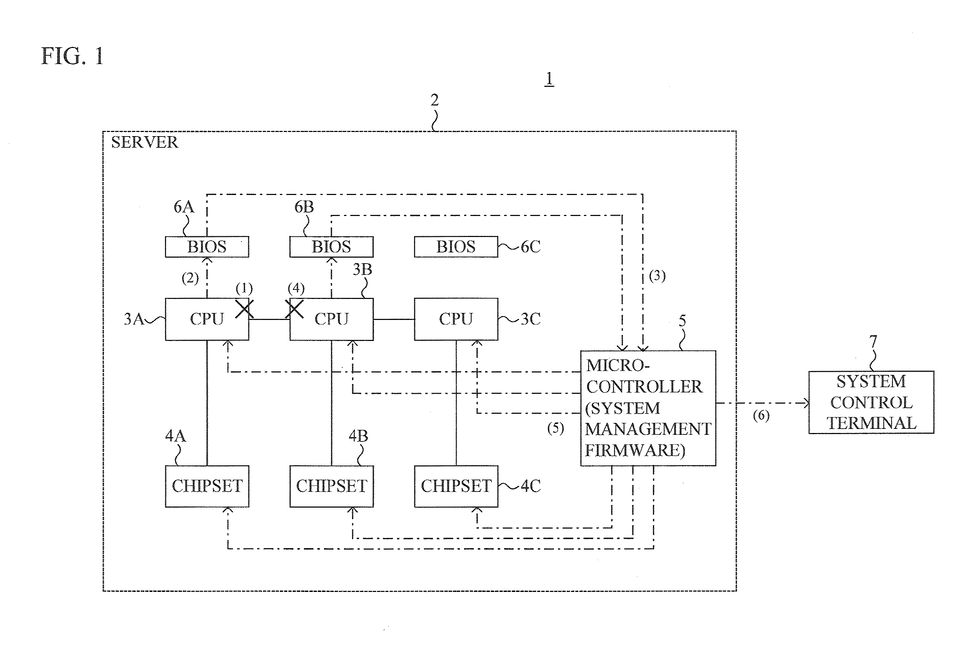

FIG. 1 is a block diagram of a conventional fault monitoring system. In FIG. 1, a fault monitoring system 1 includes a server 2 and a system control terminal 7. The server 2 includes CPUs (Central Processing Unit) 3A to 3C, chipsets 4A to 4C, a microcontroller 5, and BIOSs (Basic Input/Output System) 6A to 6C.

In the fault monitoring system 1, when an error occurs in the CPU 3A ((1) of FIG. 1), the CPU 3A notifies the BIOS 6A of interruption ((2) of FIG. 1). The BIOS 6A reports the occurrence of the error to system management firmware in the microcontroller 5 ((3) of FIG. 1). At this time, it is assumed that a secondary error has occurred in the CPU 3B ((4) of FIG. 1). The secondary error is an error resulting from a primary error, i.e., an error which has occurred in the CPU 3A. The system management firmware reads out values of error status registers from the CPUs 3A to 3C and the chipsets 4A to 4C by making primary error report into a trigger ((5) of FIG. 1). The system management firmware transmits the readout values of the error status registers to the system control terminal 7, and displays the readout values of the error status registers on the system control terminal 7 ((6) of FIG. 1).

In this case, even when a user sees the values of the error status registers in the CPUs 3A and 3B displayed on the system control terminal 7, the user cannot distinguish between the primary error and the secondary error. This is because the secondary error occurs before the system management firmware reads out the values of error status registers in all the CPUs and all the chipsets after the CPU 3A notifies the BIOS 6A of interruption.

Therefore, there has been known a log information collecting method that periodically collects log information of an error status register included in a single CPU or a single chipset, regardless of whether the CPU which generates the error notifies a BIOS of the interruption of (e.g. see Patent Document 1).

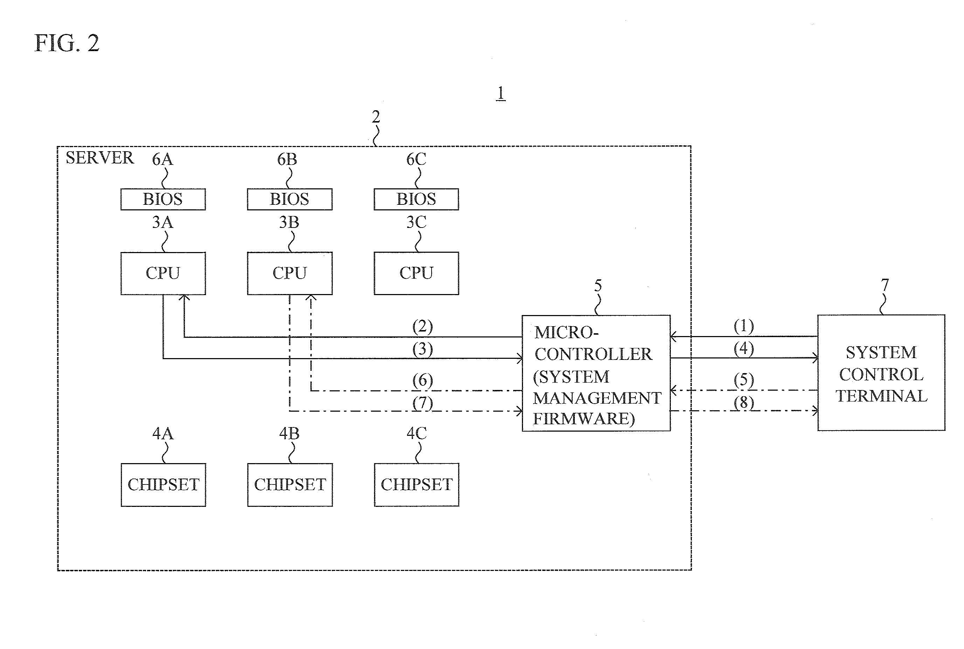

FIG. 2 is a diagram illustrating a method different from the method for reading out the values of the error status registers in FIG. 1.

First, the system control terminal 7 outputs a request for reading out a value of an error status register in the CPU 3A to the system management firmware ((1) of FIG. 2). The system management firmware issues a command for reading out the value of the error status register to the CPU 3A ((2) of FIG. 2). The CPU 3A transfers the value of an own error status register to the system management firmware ((3) of FIG. 2). The system management firmware transfers the value of the error status register in the CPU 3A to the system control terminal 7 ((4) of FIG. 2). Here, since the system control terminal 7 acquires the value of the error status register in the CPU 3A, the system control terminal 7 turns into a state to be able to output a request for reading out a value of an error status register in the CPU 3B.

Next, the system control terminal 7 outputs the request for reading out the value of the error status register in the CPU 3B to the system management firmware in the microcontroller 5 ((5) of FIG. 2). The system management firmware issues a command for reading out the value of the error status register to the CPU 3B ((6) of FIG. 2). The CPU 3B transfers the value of an own error status register to the system management firmware ((7) of FIG. 2). The system management firmware transfers the value of the error status register in the CPU 3B to the system control terminal 7 ((8) of FIG. 2).

Thus, when the system control terminal 7 reads out the values of the error status registers in the CPUs or the chipsets, a process to read out the value of the error status register in the single CPU is completed, and then a process to a next CPU is performed.

Thus, there has been conventionally known an integrated management device that periodically collects log data from a plurality of target devices, and displays the log data (e.g. see Patent Document 2).

### PRIOR ART DOCUMENT

### PATENT DOCUMENT

Patent Document 1: Japanese Laid-open Patent Publication No. 9-321728
Patent Document 2: Japanese Laid-open Patent Publication No. 11-353145

### DISCLOSURE OF THE INVENTION

### PROBLEMS TO BE SOLVED BY THE INVENTION

By the way, since the log information of the error status register included in the single CPU or the single chipset is periodically collected in the above-mentioned log information collecting method disclosed in Patent Document 1, the values of the error status registers in the CPUs or the chipsets cannot be read out simultaneously. Similarly, the integrated management device of Patent Document 2 only collects log data periodically, and hence the integrated management device cannot simultaneously read out the values of the error status registers in the CPUs or the chipsets. Therefore, in Patent Documents 1 and 2, when errors have occurred in the CPUs or the chipsets, there is a problem that it is difficult to specify the CPU or the chip set which has generated the error first.

In view of the above described problem, it is an object to provide a fault monitoring device, a fault monitoring method, and a program that can easily specify a monitored object causing fault from among a plurality of monitored objects.

### MEANS FOR SOLVING THE PROBLEMS

In order to achieve the above-mentioned object, a fault monitoring device described herein includes: a receiving means adapted to receive designation information which designates a plurality of monitored objects, an acquisition beginning condition of log data from the monitored objects, and a time interval for acquiring the log data; an acquiring means adapted to, when the acquisition beginning condition of log data is met, acquire the log data from the monitored objects according to the time interval; and an output means adapted to output the acquired log data in the form of a list according to time order.

A fault monitoring method described herein includes: receiving designation information which designates a plurality of monitored objects, an acquisition beginning condition of log data from the monitored objects, and a time interval for acquiring the log data; acquiring the log data from the monitored objects according to the time interval when the acquisition beginning condition of log data is met; and outputting the acquired log data in the form of a list according to time order.

A program described herein for causing a computer to execute a process, the process includes: receiving designation information which designates a plurality of monitored objects, an acquisition beginning condition of log data from the monitored objects, and a time interval for acquiring the log data; acquiring the log data from the monitored objects according to the time interval when the acquisition beginning condition of log data is met; and outputting the acquired log data in the form of a list according to time order.

### EFFECTS OF THE INVENTION

A fault monitoring device, a fault monitoring method, and a program described herein can easily specify a monitored object causing fault from among a plurality of monitored objects.

### BRIEF DESCRIPTION OF DRAWINGS

FIG. 1 is a block diagram of a conventional fault monitoring system;
FIG. 2 is a diagram illustrating a method different from a method for reading out values of error status registers in FIG. 1;
FIG. 3A is a block diagram of a fault monitoring system according to present embodiment;
FIG. 3B is a schematic diagram illustrating configuration of each CPU included in a server;
FIG. 3C is a schematic diagram illustrating configuration of each chipset included in the server;
FIG. 4 is a diagram illustrating an example of a setting screen of a system control terminal 30 for setting designation information;
FIG. 5 is a flowchart illustrating a process performed by a fault replication test;
FIG. 6 is a diagram illustrating an example of a display screen of the system control terminal 30 which displays log data;
FIG. 7 is a schematic diagram illustrating a variation example of a fault monitoring system 100 in FIG. 3A; and
FIG. 8 is a diagram illustrating an example of the display screen of the system control terminal 30 which displays the log data.

### DESCRIPTION OF EMBODIMENTS

A description will be given of embodiments of the invention, with reference to drawings.

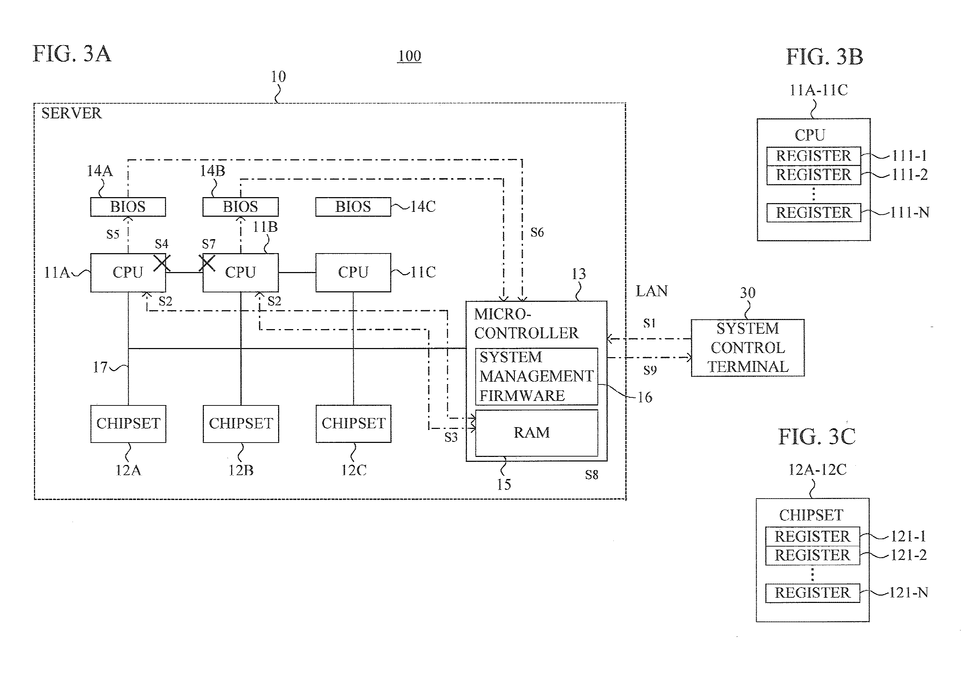

FIG. 3A is a block diagram of a fault monitoring system according to present embodiment. FIG. 3B is a schematic diagram illustrating configuration of each CPU included in a server. FIG. 3C is a schematic diagram illustrating configuration of each chipset included in the server.

In FIG. 3A, a fault monitoring system 100 includes a server 10 as a fault monitoring device, and a system control terminal 30. The server 10 includes CPUs (Central Processing Unit) 11A to 11C, chipsets 12A to 12C, a microcontroller 13 (which functions as a receiving unit, an acquiring unit and an output unit), and BIOSs (Basic Input/Output System) 14A to 14C. The microcontroller 13 includes system management firmware 16 and a RAM 15. The RAM 15 stores designation information designated by the system control terminal 30, and log data from the CPUs and/or the chipsets.

The designation information includes: (1) information that designates an address for acquiring log data, i.e., at least one register in the CPUs and/or the chipsets, which is a monitored object; (2) information that designates an acquisition beginning condition of the log data, i.e., a trigger; and (3) information that designates a time interval for acquiring the log data. The system management firmware 16 receives the designation information from the system control terminal 30, and acquires the log data from the designated register in the CPUs and/or the chipsets, based on the received designation information. The acquired log data is stored into the RAM 15.

The microcontroller 13 is connected to each CPU and each chipset via an IIC (Inter-Integrated Circuit) bus 17. Moreover, the microcontroller 13 is connected to the system control terminal 30 via a LAN (Local Area Network). The system control terminal 30 is an information processing terminal such as a computer and a mobile terminal.

As illustrated in FIG. 3B, each of the CPUs 11A to 11C includes a plurality of registers 111-1 to 111-N (N=2, 3, ...). One of the registers is an error status register indicating an error status of the CPU. A remaining register is at least one of a register indicating an more detailed error status, a register that holds a value of a CRC (Cyclic Redundancy Check) error counter of a transmission channel between the CPUs, an address register, a control register, and so on.

Similarly, as illustrated in FIG. 3C, each of the chipsets 12A to 12C includes a plurality of registers 121-1 to 121-N (N=2, 3, ...). One of the registers is an error status register indicating an error status of the chipset. A remaining register is at least one of a general-purpose register, an address register, a control register, and so on.

The log data of the register in each CPU or each chipset is a value to be read from the error status register included in each CPU or each chipset. For example, in the CPU or the chipset designed by a logic which sets the error status to a value "1", when the value read from the error status register is "1", the CPU or the chipset containing the error status register is an abnormal status. For example, when the value read from the error status register is "0", the CPU or the chipset containing the error status register is a normal status.

The acquisition beginning condition of the log data can be designated using the value of any one register. For example, a case where the register holding the value of the CRC (Cyclic Redundancy Check) error counter of the transmission channel between the CPUs exceeds a given value can be designated as the acquisition beginning condition of the log data. Further, the acquisition beginning condition of the log data may be designated using time and the number of clocks.

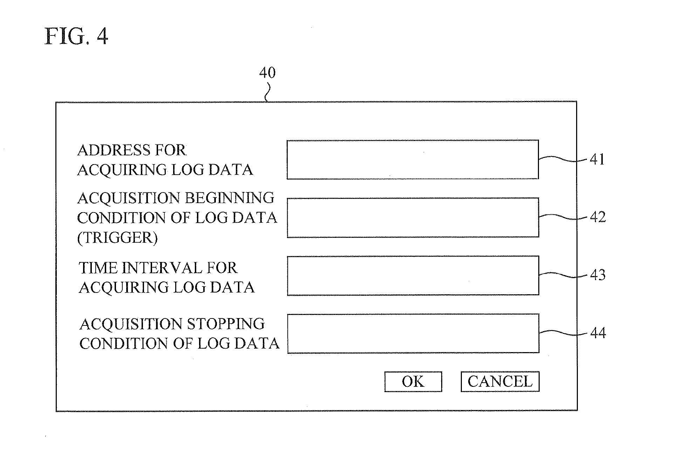

FIG. 4 is a diagram illustrating an example of a setting screen of the system control terminal 30 for setting the designation information.

A setting screen 40 of FIG. 4 includes: a column 41 that designates an address for acquiring the log data; a column 42 that designates the acquisition beginning condition of the log data; a column 43 that designates a time interval for acquiring the log data; and a column 44 that designates an acquisition stopping condition of the log data. In the column 41, an address or an ID of the register in the CPU or the chipset is described, for example. In the column 42, a condition such as "value of general-purpose register = 1" is described, for example. In the column 43, a time interval such as 10 ms is described, for example. In the column 44, a condition such as "values of all registers = 1" or stop time such as "1 minute" is described. In the column 44, the acquisition stopping condition of the log data is designated in advance, so that acquisition of the log data can be stopped automatically. When a user depresses an OK button of the setting screen 40, the information described in the columns 41 to 44 is transmitted to the microcontroller 13 as the designation information, and stored into the RAM 15.

Here, a method for setting the designation information is not limited to a method utilizing the setting screen 40 of FIG. 4. For example, the system control terminal 30 may generate a command including a code that designates the address for acquiring the log data, a code that designates the acquisition beginning condition of the log data, and a code that designates the time interval for acquiring the log data, according to a user's instruction, and transmit the command to the microcontroller 13 as the designation information.

Moreover, the acquisition stopping condition of the log data does not necessarily need to be included in the designation information. In this case, the system control terminal 30 may generate a stop command for stopping acquisition of the log data according to the user's instruction, and transmit the stop command to the microcontroller 13. That is, the fault monitoring system 100 can also stop acquisition of the log data manually.

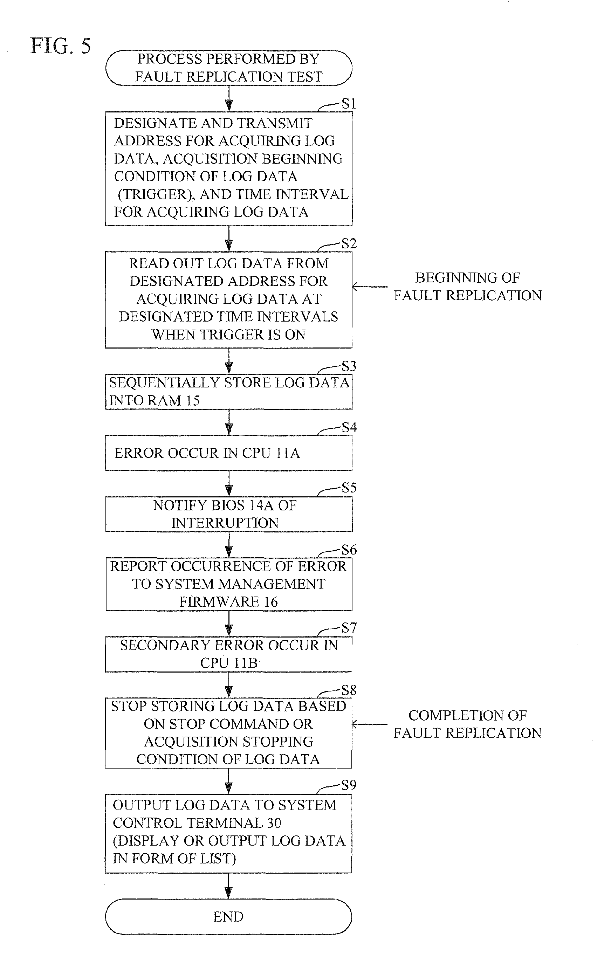

Next, a description will be given of the operation of the fault monitoring system 100, with reference to FIGs. 3A and 5. Here, the operation of the fault monitoring system 100 indicates a process performed by a fault replication test for exploring a cause of a fault which has occurred in the server 10. FIG. 5 is a flowchart illustrating the process performed by the fault replication test.

First, the system control terminal 30 transmits the address for acquiring the log data, the acquisition beginning condition of the log data (i.e., trigger), and the time interval for acquiring the log data which are designated by the user, to the microcontroller 13 as the designation information (step S1). The microcontroller 13 receives the designation information.

When the acquisition beginning condition of the log data is met (i.e., the trigger is ON), the system management firmware 16 in the microcontroller 13 reads out the log data. At this time, the system management firmware 16 reads out a value (i.e., log data) of the error status register in the CPU and/or the chipset, which is designated as the address for acquiring the log data, at designated time intervals (step S2). In an example of FIG. 3A, the error status registers in the CPUs 11A and 11B are designated as addresses for acquiring the log data, but the address for acquiring the log data is not limited to these.

The system management firmware 16 sequentially stores the read log data into the RAM 15 (step S3). The operation of step S3 is performed continuously until the system management firmware 16 receives the stop command from the system control terminal 30 or the acquisition stopping condition of the log data designated in advance is met.

Then, when an error has occurred in the CPU 11A, for example (step S4), the CPU 11A notifies the BIOS 14A of interruption (step S5). The BIOS 14A reports the occurrence of the error to the system management firmware 16 (step S6). Next, it is assumed that a secondary error has occurred in the CPU 11B (step S7). The secondary error is an error resulting from a primary error, i.e., an error which has occurred in the CPU 11A.

Then, when the system management firmware 16 has received the stop command from the system control terminal 30 or the acquisition stopping condition of the log data designated in advance has been met, readout of the log data is completed. At this time, the system management firmware 16 stops storing the log data into the RAM 15 (step S8). The system management firmware 16 outputs the log data stored into the RAM 15 to the system control terminal 30 according to a readout command from the system control terminal 30 (step S9). Here, the system management firmware 16 causes the system control terminal 30 to display the log data stored into the RAM 15 in the form of a list according to time order in which the log data stored into the RAM 15 has been acquired from each error status register, or the system management firmware 16 outputs the log data stored into the RAM 15 to the system control terminal 30 according to time order in which the log data stored into the RAM 15 has been acquired from each error status register.

Here, instead of steps S8 and S9, the system management firmware 16 may output the log data stored into the RAM 15 to the system control terminal 30 at certain intervals (e.g. 100 ms) until the system management firmware 16 receives the stop command or the acquisition stopping condition of the log data is met.

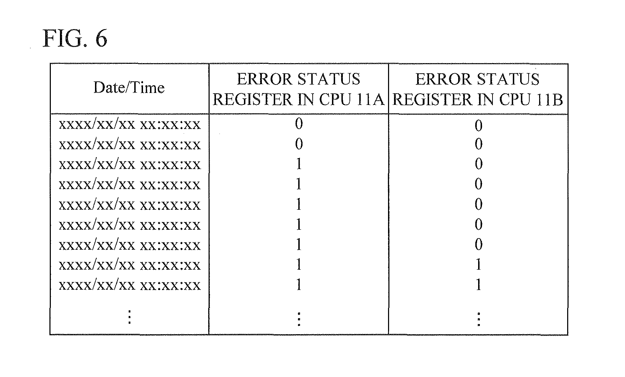

FIG. 6 is a diagram illustrating an example of a display screen of the system control terminal 30 which displays the log data. Here, the system control terminal 30 displays the log data acquired from the system management firmware 16 on a screen, but may print the log data acquired from the system management firmware 16 or output the log data acquired from the system management firmware 16 as a file.

In FIG. 6, time advances downward from a first line of FIG. 6. As illustrated in the first line of FIG. 6, at the time of the acquisition beginning of the log data, both values of the error status registers in the CPUs 11A and 11B are 0. At the time of a third line of FIG. 6, the value of the error status register in the CPU 11A changes to "1". At the time of an eighth line of FIG. 6, the value of the error status register in the CPU 11B changes to "1". Thereby, even when faults occur in the CPUs 11A and 11B, the user can confirm that the fault first has occurred in the CPU11A. When the user cannot confirm a cause of the fault by the first fault replication test, the user arbitrarily changes at least one of the address for acquiring the log data, the acquisition beginning condition of the log data (i.e., the trigger), and the time interval for acquiring the log data, and the fault replication test is repeatedly performed. Thereby, the user can confirm the cause of the fault.

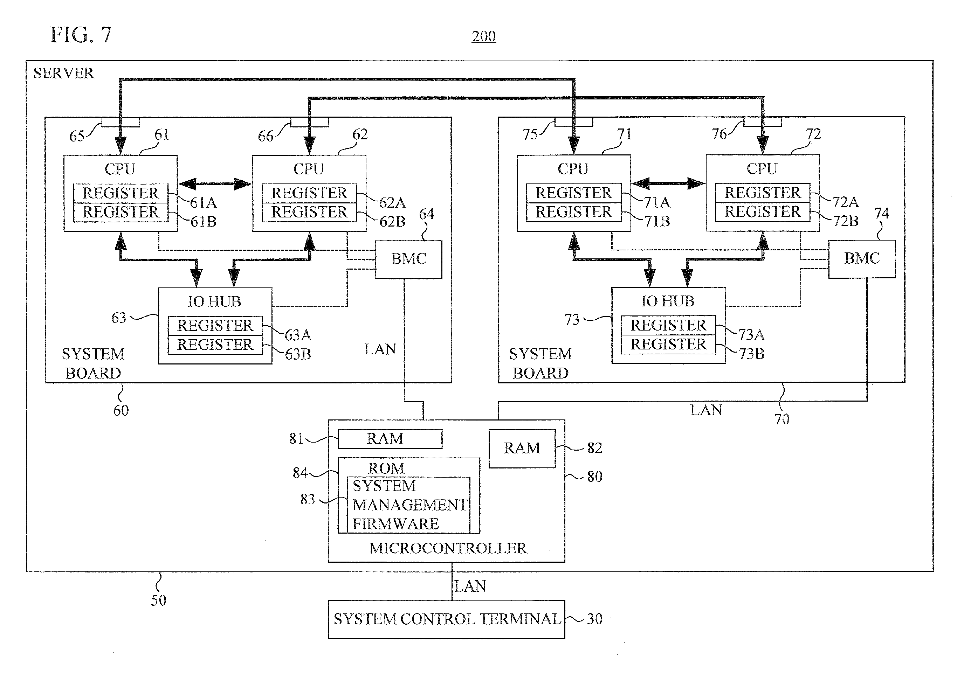

FIG. 7 is a schematic diagram illustrating a variation example of the fault monitoring system 100 in FIG. 3A.

In FIG. 7, a fault monitoring system 200 includes a server 50 and the system control terminal 30. The server 50 is a blade server, for example, and includes system boards 60 and 70, and a microcontroller 80. The system board 60 includes CPUs 61 and 62, an IO HUB 63, and a BMC (Baseboard Management Controller) 64. The CPUs 61 and 62 perform various calculation. The IO HUB 63 is a chip that offers an interface performing communication with the CPU 61 or 62, and various IO devices. The BMC 64 monitors hardware errors of the CPUs 61 and 62, and the IO HUB 63, and notifies system management firmware 83 of a result of the monitoring.

The CPU 61 includes registers 61 A and 61B, and the CPU 62 includes registers 62A and 62B. The IO HUB 63 includes registers 63A and 63B. Each of the CPUs 61 and 62 and the IO HUB 63 may include two or more registers. Moreover, each of the CPUs 61 and 62 and the IO HUB 63 include at least error status register. For example, the registers 61A to 63A are error status registers. For example, any one of the registers 61B to 63B becomes an object of the acquisition beginning condition of the log data (i.e., the trigger).

The CPU 61 is connected to the CPU 62 and the IO HUB 63 with the use of a connecting technology such as FSB (Front Side Bus), QPI (Quick Path Interconnect), or Hyper Transport. Moreover, the CPU 61 is connected to a CPU 71 in the system board 70 via a connector 65. The CPU 62 is connected to the IO HUB 63 with the use of a connecting technology such as FSB, QPI, or Hyper Transport. Moreover, the CPU 62 is connected to a CPU 72 in the system board 70 via a connector 66. The BMC 64 is connected to the CPUs 61 and 62 and the IO HUB 63 via the IIC (Inter-Integrated Circuit) bus. The BMC 64 is connected to the microcontroller 80 via the IIC or an internal LAN.

The microcontroller 80 includes: a RAM 81 that stores the system management firmware 83 and the above-mentioned designation information; and a RAM 82 that stores the log data of each CPU and/or each IO HUB. The system management firmware 83 is read out from the ROM 84 by the microcontroller 80, and operates. Here, the RAMs 81 and 82 may be comprised of one RAM. Since the configuration of the system board 70 is the same as that of the system board 60, description thereof is omitted.

In the fault monitoring system 200 configured as mentioned above, the user designates on the system control terminal 30 the address for acquiring the log data, the acquisition beginning condition of the log data, and the time interval for acquiring the log data. For example, the user designates the register 61A in the CPU 61, the register 63A in the IO HUB 63, and the register 71A in the CPU 71, as the address for acquiring the log data. The user designates that the value of the register 61B in the CPU 61 changes from "0" to "1", as the acquisition beginning condition of the log data (i.e., the trigger). Moreover, the user designates 10 ms as the time interval for acquiring the log data. The system control terminal 30 transmits to the microcontroller 80 the designation information including the address for acquiring the log data, the acquisition beginning condition of the log data, and the time interval for acquiring the log data, which is designated by the user. The microcontroller 80 receives the designation information.

When the value of the register 61 B in the CPU 61 changes from "0" to "1 ", the system management firmware 83 acquires the values of the register 61A in the CPU 61, the register 63A in the IO HUB 63, and the register 71A in the CPU 71 via the BMCs 64 and 74 at intervals of 10 ms. The acquired values, i.e., the log data are sequentially stored into the RAM 82. Then, when the system management firmware 83 has received the stop command from the system control terminal 30, the system management firmware 83 finishes acquiring the values of the register 61A in the CPU 61, the register 63A in the IO HUB 63, and the register 71A in the CPU 71. The system management firmware 83 outputs the log data stored into the RAM 82 to the system control terminal 30 according to a readout command from the system control terminal 30.

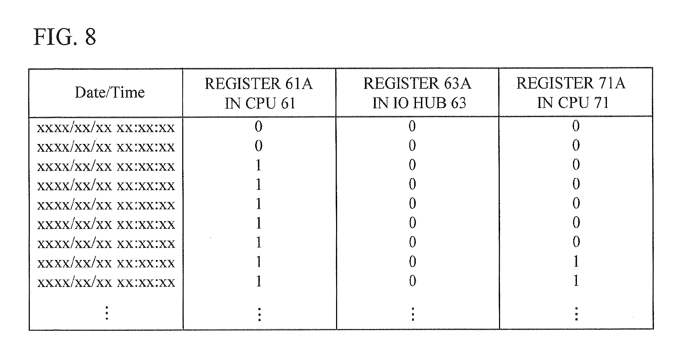

FIG. 8 is a diagram illustrating an example of the display screen of the system control terminal 30 which displays the log data. Here, the system control terminal 30 displays the log data acquired from the system management firmware 83 on a screen, but may print the log data acquired from the system management firmware 83 or output the log data acquired from the system management firmware 83 as a file.

As illustrated in FIG. 8, the values of the respective register are displayed in the form of a list according to time order, and change with time. It should be noted that time advances downward from a first line of FIG. 8. As illustrated in the first line of FIG. 8, at the time of the acquisition beginning of the log data, all values of the register 61A in the CPU 61, the register 63A in the IO HUB 63, and the register 71A in the CPU 71 are 0. In FIG. 8, "0" indicates a normal status, and "1" indicates an abnormal status. At the time of a third line of FIG. 8, the value of the register 61A in the CPU 61 changes to "1 ". At the time of an eighth line of FIG. 8, the value of the register 71A in the CPU 71 changes to "1". Thereby, the user can confirm that the change of the value of the register 61A in the CPU61 is earlier than that of the value of the register 71A in the CPU71. That is, the user can confirm that the fault first has occurred in the CPU61.

As described above, according to the present embodiment, the system management firmware 16 or 83 receives the designation information that designates the monitored objects (i.e., plural error status registers), the acquisition beginning condition of the log data from the error status registers, and the time interval for acquiring the log data. Then, when the acquisition beginning condition of the log data is met, the system management firmware 16 or 83 acquires the log data from the monitored objects according to the designated time interval, and outputs the acquired log data in the form of a list according to time order. Therefore, the user can see a state where the values of the error status registers change, and specify a monitored object causing the fault from among a plurality of monitored objects.

When the CPUs and the chipsets do not have special mechanisms for specifying the occurrence of the fault, the user needs to read out the values of the error status registers included in the CPUs or the chipsets and to specify an occurrence part of the fault. Therefore, when the CPUs and the chipsets do not have special mechanisms for specifying the occurrence of the fault, the fault monitoring system according to the present embodiment is effective particularly.

A non-transitory recording medium on which the software program for realizing the functions of the server 10 is recorded may be supplied to the server 10, and the microcontroller 13 may read and execute the program recorded on the non-transitory recording medium. In this manner, the same effects as those of the above-mentioned embodiments can be achieved. The non-transitory recording medium for providing the program may be a CD-ROM (Compact Disk Read Only Memory), a DVD (Digital Versatile Disk), a Blu-ray Disk, SD (Secure Digital) card or the like, for example. Alternatively, the microcontroller 13 may execute a software program for realizing the functions of the server 10, so as to achieve the same effects as those of the above-described embodiments.

### EXPLANATION OF REFERENCES

10 server, 11A to 11C CPU, 12A to 12C chipset, 13 microcontroller, 14A to 14C BIOS, 15 RAM, 16 system management firmware, 30 system control terminal, 100 fault monitoring system

## Claims

1. A fault monitoring device **characterized by** comprising:
a receiving means adapted to receive designation information which designates a plurality of monitored objects, an acquisition beginning condition of log data from the monitored objects, and a time interval for acquiring the log data;
an acquiring means adapted to, when the acquisition beginning condition of log data is met, acquire the log data from the monitored objects according to the time interval; and
an output means adapted to output the acquired log data in the form of a list according to time order.

2. The fault monitoring device as claimed in claim 1, **characterized in that** the monitored objects are a plurality of error status registers included in any one of a plurality of processors, a plurality of chipsets, or a combination of a processor and a chipset, and the log data is values of the error status registers.

3. The fault monitoring device as claimed in claim 1 or 2, **characterized in that** the designation information includes an acquisition stopping condition of the log data, and when the acquisition stopping condition of the log data is met, the acquiring means stops acquiring the log data from the monitored objects.

4. The fault monitoring device as claimed in claim 1 or 2, **characterized in that** when the receiving means has received an acquisition stopping command of the log data from an external device, the acquiring means stops acquiring the log data from the monitored objects.

5. A fault monitoring method **characterized by** comprising:
receiving designation information which designates a plurality of monitored objects, an acquisition beginning condition of log data from the monitored objects, and a time interval for acquiring the log data;
acquiring the log data from the monitored objects according to the time interval when the acquisition beginning condition of log data is met; and
outputting the acquired log data in the form of a list according to time order.

6. A program for causing a computer to execute a process, the process **characterized by** comprising:
receiving designation information which designates a plurality of monitored objects, an acquisition beginning condition of log data from the monitored objects, and a time interval for acquiring the log data;
acquiring the log data from the monitored objects according to the time interval when the acquisition beginning condition of log data is met; and
outputting the acquired log data in the form of a list according to time order.
